# EUROPEAN PATENT SPECIFICATION

(11) **EP 4 493 830 B1**
(45) Date of publication and mention of the grant of the patent: **29.04.2026**
(21) Application number: 23713431.7
(22) Date of filing: 03.03.2023
(51) Int. Cl.: F16B 12/20, F16B 5/06, F16B 12/24, A47B 96/06

(54) **RIGID SUPPORT AND FIXING DEVICE FOR FURNITURE SHELVES**
STARRE STÜTZ- UND BEFESTIGUNGSVORRICHTUNG FÜR MÖBELREGALE
DISPOSITIF DE SUPPORT ET DE FIXATION RIGIDE POUR ÉTAGÈRES DE MEUBLE

(30) Priority: 14.03.2022 IT 202200004841
(43) Date of publication of application: 22.01.2025
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Dragotti & Associati S.P.A.
(86) International application number: PCT/IB2023/051980
(87) International publication number: WO 2023/175432

(56) References cited:
- EP-A1- 3 815 576
- WO-A1-2021/254665

## Description

The present invention relates to a rigid support and fixing device for furniture shelves arranged between opposite sides.

In general, in the sector of furniture with shelves, support devices are known, called shelf supports, which ensure stable positioning of the individual shelf between the sides of the furniture unit.

The current shelf supports have replaced a set of hardware elements that had to be assembled and fitted and had the drawback of being exposed to view, resulting in poor aesthetics. Furthermore, said elements had to be installed together with appropriate covering components such as plugs or closing plates designed to improve overall appearance, with wastage of time and resources.

Said initial arrangements have been gradually replaced by support and fixing devices such as, for example, those described in patents like EP1228721 or WO2015/158622, WO2021/254665.

These types of shelf support also had a rather complex structure and required either the drilling of complex holes in the shelf or the positioning of parts both in the sides and the shelf. Consequently, although the assembly and fitting processes were advantageous compared to the old hardware cited above, they too entailed a number of drawbacks.

The same applicant holds the patent application EP3790429 relating to a support device for furniture shelves for the reversible connection of a shelf to the opposite sides of a furniture unit. In particular, said device at least partly meets the need, felt in the sector, to provide the furniture shelves with increasingly miniaturized support devices that ensure connection with the sides of a furniture unit, thus minimizing the aesthetic impact and even being fully concealed from view once the shelf has been fitted. In fact, one embodiment thereof presents a main body of the device provided on a vertical transverse plane with a bilobate profile having two essentially circular section convex end portions. Said embodiment requires a fairly large hole having a complementary shape in the body of the shelf.

A subsequent patent EP3944732 proposes a solution which, although seemingly simplified compared to the previous ones, entails for example a window in the casing of the shelf support.

A window of this type is not particularly advantageous since it creates a route for infiltration into the device of foreign materials which could for example be found in the hole of the shelf, such as drilling residues or other, affecting the correct operation thereof. Furthermore, the arrangement in the window of the shelf support casing of a pair of protrusions that move during sliding of the pin can cause contacts with the operator or with external elements, resulting in various problems.

In the field, a further problem of these shelf supports is that due to the series of component elements, the assembly and/or fitting thereof has drawbacks in terms of both time and handling.

In-line fitting would therefore be desirable, avoiding subsequent handling of the individual shelf support.

The general object of the present invention is to provide a support and fixing device for furniture shelves arranged between opposite sides capable of solving the above-mentioned problems of the known art in an extremely simple, inexpensive and particularly functional manner.

A further object of the present invention is to provide a support and fixing device for furniture shelves which is not bulky and requires drilling within the limits of the shelf dimensions.

A further object of the present invention is to provide a support and fixing device for furniture shelves with casing closed relative to the outside, thus preventing the entry of foreign elements.

Another object of the present invention is to identify a support and fixing device for furniture shelves which guarantees stable and safe arrangement of the shelf and is particularly resistant and rigid.

A further object of the present invention is to identify a support and fixing device for furniture shelves which is easy to fit, preferably saving time and work, even in-line in automatic mode.

The above-mentioned objects are achieved by a rigid support and fixing device for furniture shelves produced according to the independent claim 1 and the following dependent claims.

The structural and functional characteristics of the present invention and its advantages compared to the known art will become clearer and more evident from an examination of the following description, referring to the attached schematic drawings, which show an embodiment example of the invention. In the drawings:
figure 1 is a perspective view of a rigid support and fixing device for furniture shelves with the components thereof exploded and figure 1B is a perspective view of the same device with the cam element inserted in the pin;
figure 2 is a perspective view of the device of figure 1 once assembled and closed;

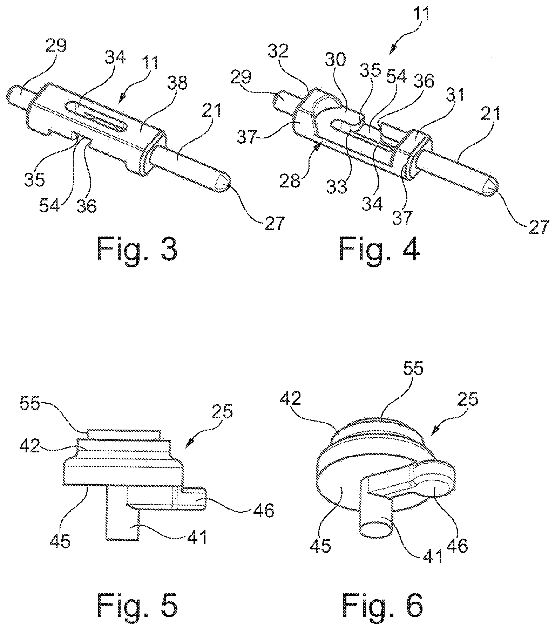

figures 3 and 4 are perspective views of a pin forming part of the device of figure 1 from above with view of the inside and from below;
figures 5 and 6 are views of a cam element forming part of the device of figure 1 in side elevation and in perspective view from below;
figures 7, 8 and 9 are plan views in longitudinal section from above of the device of the present invention that show the inner part of the device in three different positions of the pin when the pin is pushed from the outside towards the inside;
figures 10, 11 and 12 are perspective views of the device of the present invention according to figures 7, 8 and 9 in section in the three different positions of the pin already shown when it is pushed from the outside towards the inside according to the arrow G;
figures 13, 14 and 15 are plan views in longitudinal section from above of the device of the present invention which show the inner part of the device in three different positions of the pin when it is actuated to move from the outside towards the inside;
figures 16, 17 and 18 are perspective views of the device of the present invention according to figures 13, 14 and 15 in section in the three different positions of the pin already shown when it is actuated to move from the outside towards the inside;
figures 19 and 20 are plan views from above of the device of the present invention of figures 1 and 2 closed and respectively in plan in longitudinal section from above in a partially retracted position of the pin controlled by the cam element;
figures 21, 22 and 23 are cross sections of the device in the position of figure 19 taken along the line XXI-XXI, line XXII-XXII and line XXIII-XXIII of figure 19;
figure 24 is a schematic view in side elevation showing the assembly of a shelf provided with two shelf supports according to the invention;
figures 25 and 26 are schematic views showing how the cam element can be moved according to how the shelf has been positioned in the side;
figures 27 and 28 are perspective views of a further embodiment of the pin forming part of the device of the invention from above with view of the inside and from below;
figures 29 and 30 are plan views from above of the device of the present invention closed and respectively in plan in longitudinal section from above in a position of the pin according to the embodiment of figures 27 and 28, partially retracted controlled by the cam element;
figures 31, 32 and 33 are cross sections of the device in the position of figure 29 taken along the line XXXI-XXXI, line XXXII-XXXII and line XXXIII-XXXIII of figure 29;
figures 34 and 35 show longitudinal sections in elevation and in a perspective view of the device of figures 1 and 2 taken along line A-A of figure 36 highlighting inclined surfaces inside the body which temporarily deform during insertion of the components in the casing and return to position after said assembly operation;
figures 37 to 41 show various views of a further variation of the body of the casing which allows insertion of the parts inside it by in-line assembly;
figures 42 and 43 are a perspective view of a further embodiment of a rigid support and fixing device for furniture shelves with its components exploded, except for the cam element which is already inserted in the pin, and a view of the same device assembled and closed;
figures 44 to 48 show further views of the device of figures 42 and 43;
figures 49 to 59 show a further embodiment of the device of the invention with closed body in different views thereof closed, in section, exploded and partially split to show all its components.

In the following description, for illustration of the figures, identical reference numbers are used to indicate construction elements with the same function. Furthermore, for clarity of illustration, some numerical references may not be repeated in all the figures.

Indications such as "vertical" and "horizontal", "upper" and "lower" (in the absence of other indications) should be read with reference to the assembly (or operating) conditions and referring to the ordinary terminology in use in current language, where "vertical" indicates a direction substantially parallel to that of the force of gravity vector "g" and "horizontal" indicates a direction perpendicular to it.

With reference to the figures, provided by way of non-limiting example, a rigid support and fixing device for furniture shelves is shown of the type designed to provide the connection by means of a pin 11 associated with a shelf 12 in a blind hole 13 obtained in the thickness thereof.

The pin 11 is configured to protrude from a transverse edge of the shelf 12 and is designed to fit into a corresponding hole 14 that houses it obtained in a side 15 of a furniture unit.

The device of the invention comprises a casing which contains the pin 11 pushed at one end thereof by a spring 24 and movable within it either freely or in an externally controlled manner to compress the cited spring 24. The pin 11 is movable between a position of maximum extraction and a position of maximum retraction into the casing.

The casing consists of a hollow body 16 with an essentially cylindrical general shape externally, provided at a first end with an opening 18 and at the other end with a closed wall 19 provided with a through hole 20 for the passage of a free terminal end 21 of the pin 11, which slides in said through hole 20.

Furthermore, the hollow body 16 of the casing has externally, in a lateral portion of the end provided with the hole 20, a pair of ribs or fins 22, arranged on opposite sides of the outer surface of the hollow body 16 of the casing, which taper towards the other end and terminate well before it. Said ribs or fins 22 interact with the inner wall of the blind hole of the shelf, increasing the stability of the device and distributing the loads borne by the shelf.

As said, the body 16 of the casing is hollow to receive the pin 11 and the elements associated with it which determine and govern the translation movement relative to the body 16.

The casing is arranged in the thickness of the shelf 12 in the cited blind hole 13.

The hollow body of the casing obtained in one single piece has optimal rigidity particularly useful for avoiding breakage of the shelf in which it is inserted. In this way, in fact, one of the objects of the new shelf support is achieved, namely a high rigidity which, as has been seen, is not present in the shelf supports of the state of the art cited previously.

The hollow body 16 of the casing houses a spring 24, the majority of the pin 11 that slides in it and a cam element 25. Said elements, once inserted in the body 16, are kept inside it by a plug 17 closing the opening 18 obtained and present at the cited first end of the hollow body 16.

The spring 24 is arranged at a first end thereof in an inner crown 23 which extends from the plug 17 towards the inside of the hollow body 16 of the casing. At the second end it is housed above an axial extension 29 that extends from the pin 11 and acts as a centring and abutment for the spring 24. The spring 24 is thus arranged between said extension 29 and the plug 17 that closes the opening 18 of the body 16 of the casing; however, it can also be arranged directly against the pin 11.

The pin 11 has a cylindrical end portion 21 that terminates in a rounded or ogival tip 27 with diameter smaller than the majority of the remaining part with larger diameter, which slides in said through hole 20 of the wall 19.

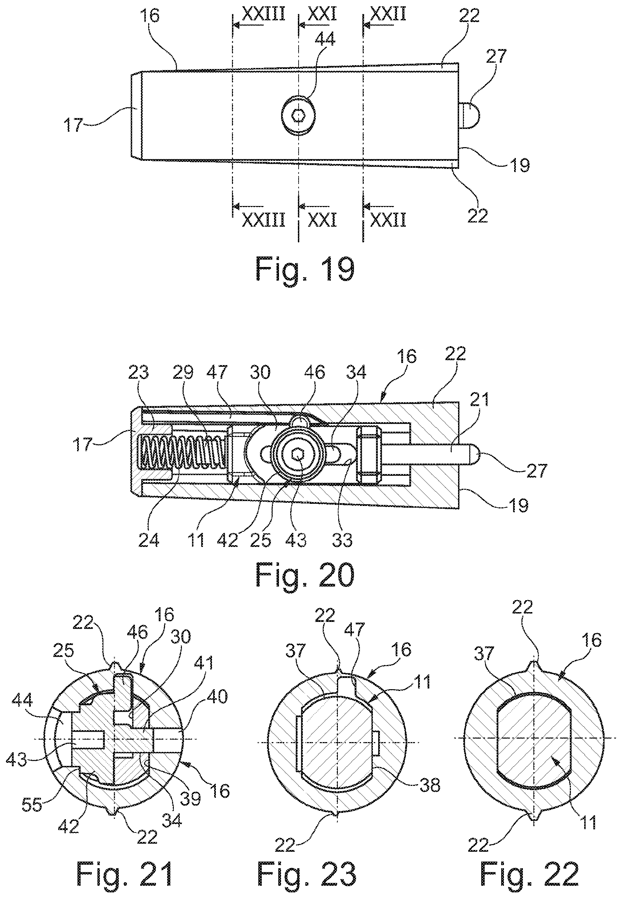

The tip 27 of the pin preferably has a rounded shape for easier sliding against the corresponding vertical wall or side 15 of the furniture unit, when it comes into contact with it during insertion and extraction of the shelf 12 (figure 23).

The pin 11 has, as mentioned, the cylindrical end portion 21 that terminates in a tip 27, an intermediate section 28 in which, as will be seen, the cam element 25 is arranged, and at the other end the axial extension 29 which extends from the pin 11 and acts as a centring and abutment for the spring 24.

The intermediate section 28 of the pin 11 has a lowered flat or flattened surface 30, delimited by a front abutment wall 31 and a rear abutment wall 32, on the outside of which, as mentioned, the spring 24 abuts on the extension 29.

Said flat surface 30 is contained in the transverse dimension of the pin 11 and in it a longitudinal slot-shaped recess 33 is obtained aligned with which a true slot 34 is provided having smaller dimension than the slot-shaped recess 33; said slot is arranged in a direction axial to the pin 11 and passes through to the other side of the pin 11.

On one side of the slot-shaped recess 33 a through opening 54 is provided which opens onto the lateral surface of the intermediate section 28 of the pin 11. Opposite ends of this through opening 54 identify engagement surfaces 35 and 36 for part of the cam element 25, as will be seen. These engagement surfaces 35, 36 are contained within the maximum dimension of the pin 11.

The intermediate section 28 of the pin 11 has lateral sections rounded in the shape of a cylinder arc 37 which collaborate in precise positioning of the pin 11 in the body 16 of the casing.

In the remaining parts, the intermediate section 28 of the pin 11 has at the top the cited flat or flattened surface 30 and at the bottom a flat surface 38 which abuts and slides on a corresponding flat surface 39 obtained on the bottom of the body 16 of the casing. In this flat surface 39 a hole 40 is obtained that houses a pin-like or shaft-like end 41 of the cam element 25, as will be seen.

In order to axially move the pin 11 inside the body 16 of the casing, the cited cam element 25 is provided, as mentioned.

The cam element 25 has at the bottom a pin-like or shaft-like end 41, with smaller diameter, that acts as a rotation axis of the cam element 25. Said pin-like or shaft-like end 41 passes through the slot 34 of the pin 11 and is positioned, as said, in the hole 40 provided in the body 16 of the casing.

Furthermore, the cam element 25 has at the other end a cylindrical head 42, with diameter larger than the shaft 41, coaxial with it, and provided with a shaped seat 43, having polygonal or otherwise shaped section, for the engagement of a wrench, for example an Allen key.

This cylindrical head 42 is arranged aligned with a corresponding hole 44 obtained in the body 16 of the casing.

In an intermediate portion of the cam element 25, immediately below the head 42, a disc portion 45 is provided which rests on the flat surface 30 of the intermediate section 28 of the pin 11. Furthermore, the cam element 25 has, below the disc portion 45, an eccentric lobed element 46 which protrudes beyond the maximum diameter of the disc portion 45.

This eccentric lobed element 46 functions as a cam when the cam element 25 is arranged in the slot-shaped recess 33, as will be seen.

In fact, for the controlled movement of the pin 11, for example returning into the body 16 of the casing, the eccentric lobed element 46 rotates and translates in the through opening 54 and determines movement, arranging itself and collaborating with the engagement surfaces 35 and 36 during rotation of the cam element 25.

For rotation of the cam element 25 and the eccentric lobed element 46, the latter furthermore passes during rotation through a recess 47 provided inside the lateral wall of the body 16 of the casing and obtained longitudinally to it, in a direction parallel to the axis, so that it can set to positions 180° from each other, as will be seen in the following operation figures.

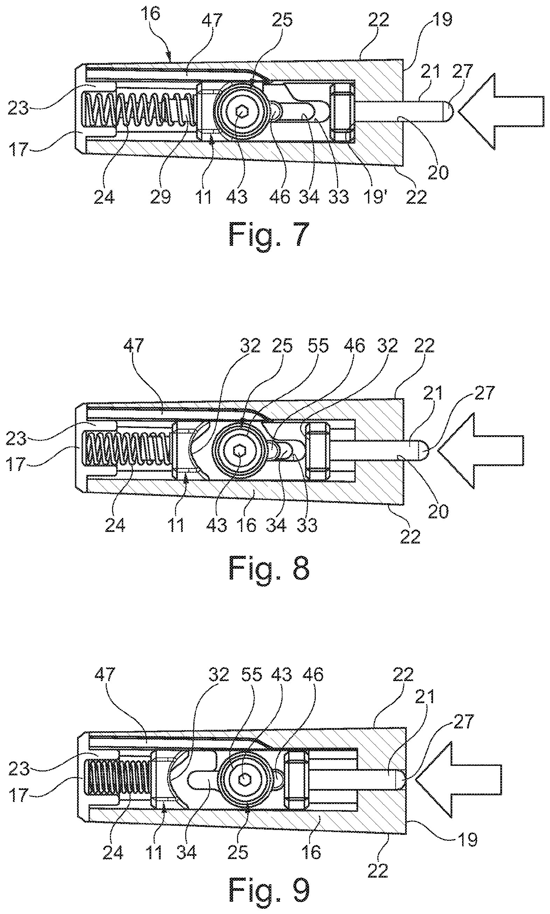

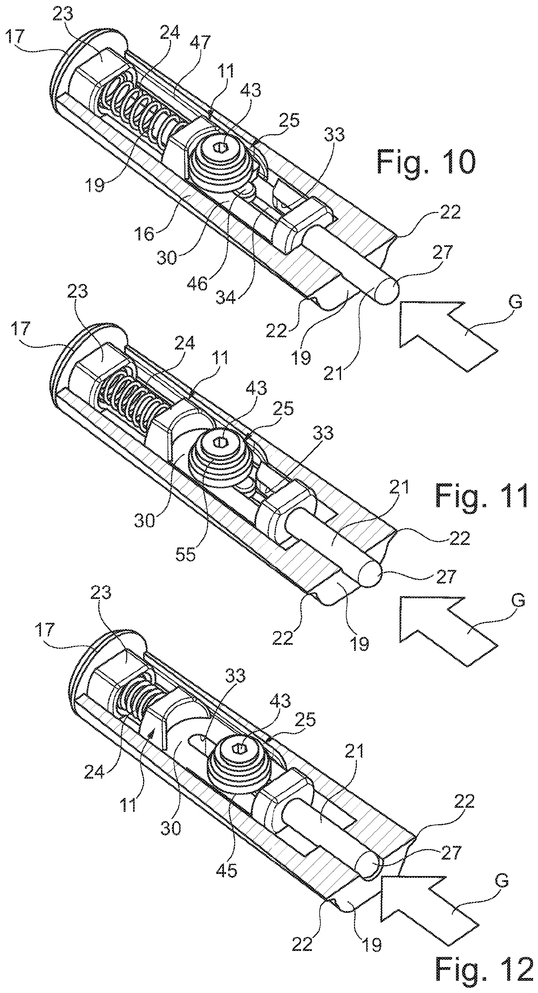

Firstly we examine figures 7 to 12 that show how the pin 11 from the maximum extraction position can be pushed inside by a simple pressure.

This occurs without the cam element 25 moving from its position, remaining inactive. Said figures show the sequence of positions when pressure is exerted on the pin 11.

This possibility is exploited for positioning of the shelf provided with said device according to the invention, causing the pin 11 to slide on the side of the furniture unit (figure 23) .

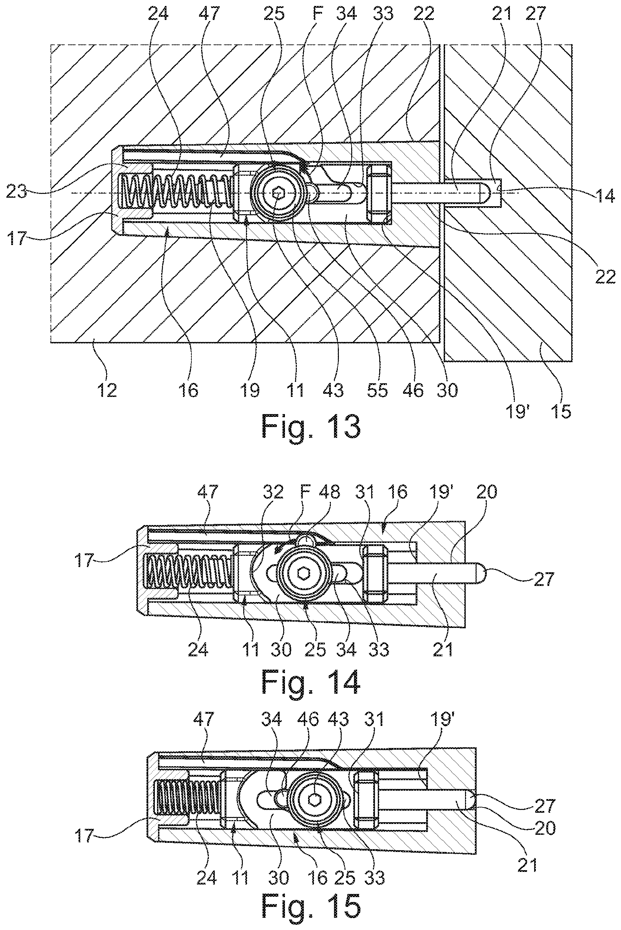

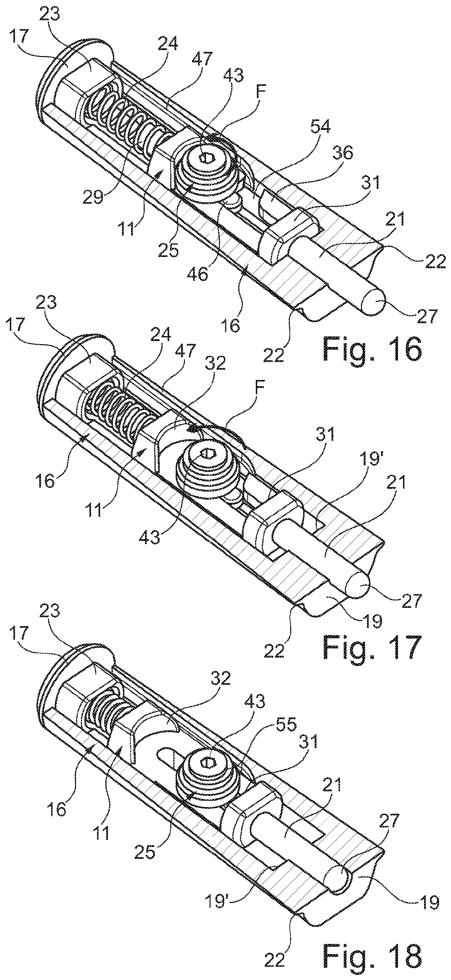

Having described realization of the device of the present invention, the operation of said device will now be illustrated also with specific reference to figures 13 to 18.

In figure 13 the device is illustrated in the position in which it is installed and operates, namely when the shelf 12 is fitted and the cylindrical end portion 21 that terminates in a tip 27 of the pin 11 is inserted in its position of maximum extension in the side 15 of the furniture unit.

In this position, the eccentric lobed element 46 of the cam element 25 is arranged in a rest position in the front part of the slot-shaped recess 33 or facing the protruding cylindrical end portion 21 of the pin 11.

The pin 11 is free to move under the action of the spring to return into the casing when the cam element 25 is in said position.

It has previously been said and seen that in this position, the pin 11 can move freely under the action of the spring; likewise it has been seen that the maximum extension of the cylindrical end portion 21 with tip 27 of the pin 11 is determined by a front abutment 31' of the pin which is arranged against an inner surface 19' of the end wall 19 of the first half-shell 16 (figures 7 and 13).

The cam element 25 is kept in position by the shaft 41 inserted in the hole 40 obtained in the flat surface 39 of the bottom of the body 16 of the casing. The shaft 41 is furthermore arranged free to translate in the true slot 34 provided in the intermediate section 28 of the pin 11. Furthermore, the disc portion 45 of the cam element 25, immediately below the head 42, rests on the flat surface 30 of the intermediate section 28 of the pin 11.

In order to disassemble the shelf 12 from this position, the cylindrical end portion 21 with tip 27 of the pin 11 must be moved back inside the body 16 of the casing.

For said purpose it is necessary to insert a wrench in the seat 43 of the cam element 25, through a hole obtained in the shelf 12 and through the hole 44 in the body 16 of the casing.

Having done this, anticlockwise rotation is performed according to the arrow F observing the figures 13 and 14, thus positioning the eccentric lobed element 46 of the cam element 25 in the opening 54 to engage with the engagement surface 35. This causes retraction of the cylindrical end portion 21 with tip 27 of the pin 11, as shown in figures 13, 14 and 20. At the same time, the eccentric lobed element 46 of the cam element 25 slides in the longitudinal recess 47 provided axially inside the lateral wall of the body 16 of the casing.

With a further rotation of the cam element 25, the eccentric lobed element 46 of the cam element 25, continuing to slide in the longitudinal recess 47, causes maximum retraction of the pin 11 (figure 15).

The pin 11 is in the maximum retraction position in the body 16 of the casing determined by complete 180° rotation of the cam element 25.

When the eccentric lobed element 46 of the cam element 25 engages with the engagement surface 35 of the pin 11, it determines the movement of said pin 11 between said maximum extraction position and said maximum retraction position in the casing by rotation of the cam element 25.

The shelf 12 can therefore be removed from its position between the sides 15 of the furniture unit.

Obviously an inverse rotation of the wrench causes the pin 11 to return to its extracted position and remain in said position due to the action of the spring 24 that returns to its extended rest position.

The structure and function of a compact support and fixing device for furniture shelves arranged between opposite sides according to the present invention has therefore been seen.

Naturally the body of the casing 16 can be made of plastic or nylon, for example, or another equivalent material known and suitable for the purpose, such as a metallic material. In turn the pin 11 can be made of metal or hard plastic and the spring 24 can be a metal coil compression spring.

The device of the present invention is particularly compact, allowing holes in the shelf and in the sides having minimum dimensions, but at the same time due to its shape it performs particularly well in terms of rigidity thanks to the body in one single piece and its section as cited above.

This can be easily seen from figures 21, 22 and 23 which show cross sections of the body 16 and identify the position of the parts therein.

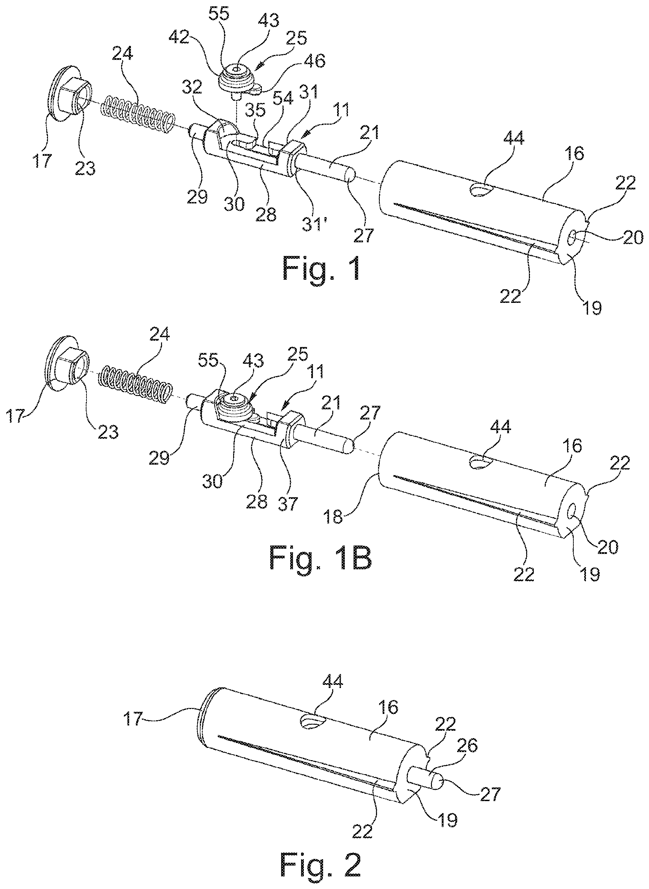

It is easy to see how the elements shown exploded in figure 1 have been inserted in the body of the casing by means of automatic in-line assembly.

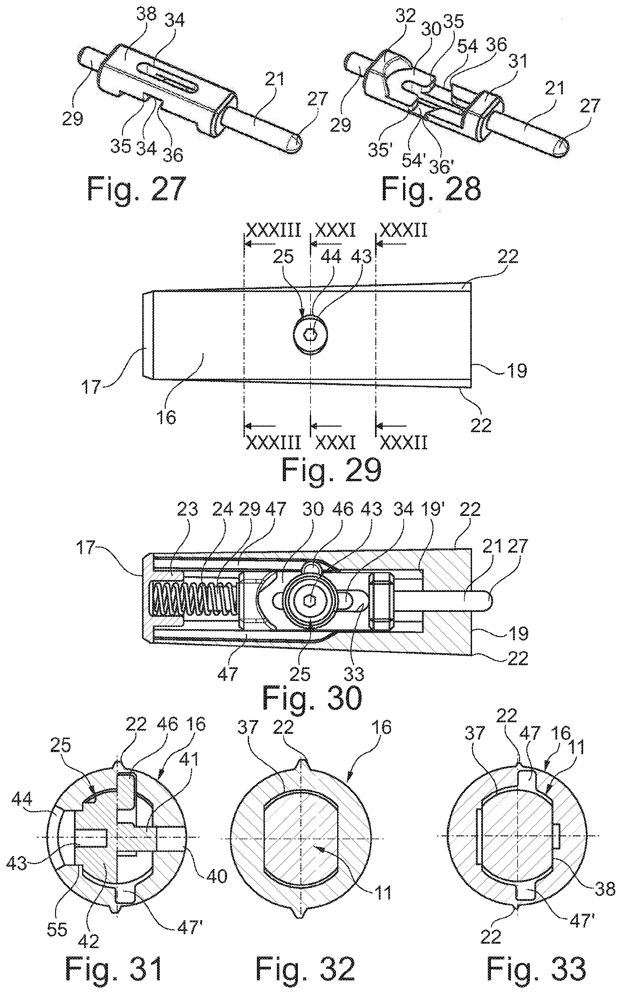

Before describing the way in which the device is assembled ready for use and inserted in the hole of the shelf, an alternative embodiment of the pin 11 is illustrated, shown in figures 27 to 33.

In these figures, where identical elements are indicated by the same reference numbers as those of the embodiment already described, the pin 11 has an embodiment that could be called "symmetrical". The symmetry consists in the fact that the intermediate section 28 of the pin 11 has on opposite sides the arrangement of opening and engagement surfaces previously described.

In fact, in addition to the first through opening 54 which opens into a lateral surface of the intermediate section 28 of the pin 11, a second through opening 54' is provided which opens into the opposite lateral surface of the intermediate section 28 of the pin 11.

Also in this case the opposite ends of this second through opening 54' identify engagement surfaces 35' and 36' for part of the cam element 25, namely for the eccentric lobed element 46 of the cam element 25.

Figures 29 to 33 show how consequently a second recess 47' has to be provided inside the body 16 of the device (figure 30), on the opposite side to the first recess 47, provided inside the lateral wall of the body 16 of the casing and also obtained longitudinally to it, in a direction parallel to the axis. In this way the eccentric lobed element 46 of the cam element 25 can set to positions at 180° from each other by rotating and passing from one of the two recesses 47 and 47' with clockwise or anticlockwise rotation.

The engagement surfaces 35, 36 and 35', 36' are replicated in order not to be limited to a specific rotation direction.

Operation remains generally the same except for this further possibility allowed by the symmetrical provision of the openings 54, 54', the engagement surfaces 35, 36 and 35', 36' and the longitudinal recesses 47, 47'.

The eccentric lobed element 46 of the cam element 25, however it rotates, engages with an engagement surface 35 or 35' of the pin 11, thus determining movement of the pin 11 between the position of maximum extraction and the position of maximum retraction in the casing by means of rotation of the cam element 25.

Having described this variation, the assembly of the device ready for use, by insertion of its components passing through the opening 18 of the body 16 of the casing, will now be illustrated.

It has been seen from the description, for example with reference to figures 1 and 2, that firstly the cam element 25 is arranged in contact on the flat surface 30 of the intermediate section 28 of the pin 11 (figure 1B). After this, automatic in-line insertion is carried out so that all the elements, thus aligned in axial direction with the body 16, are automatically inserted in the casing from said end opening 18 of the body 16 of the casing.

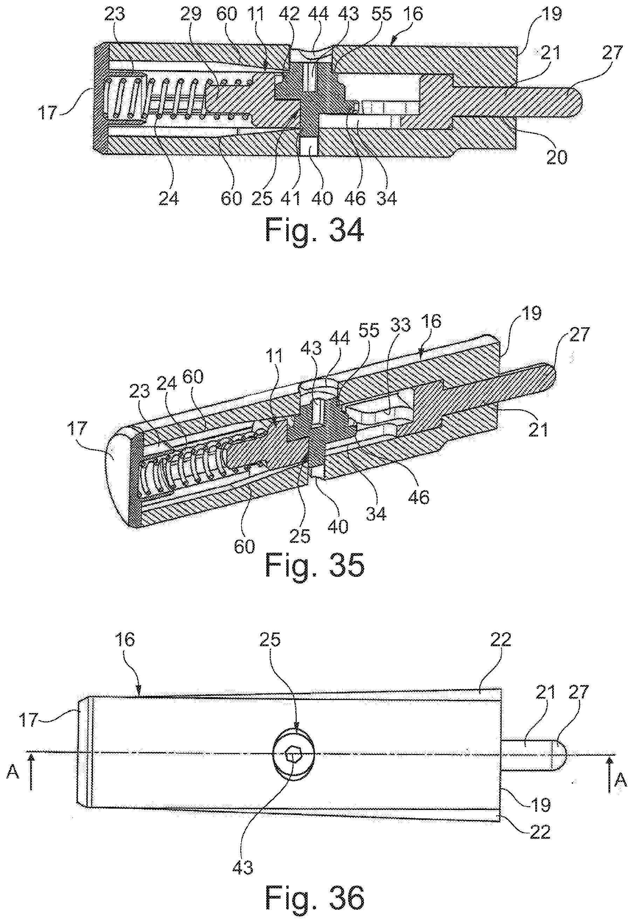

When everything is correctly assembled, the arrangement shown more clearly in figures 34 and 35 is obtained. In fact, said figures show a longitudinal section in elevation of the assembled device and a perspective view in section of the device of figures 1 and 2. Said figures have been taken along line A-A of figure 36.

Inside the hollow body 16, inner walls thereof have inclined surfaces 60. Said inclined surfaces 60 temporarily deform during insertion of the components in the hollow body 16 of the casing and return to position after said insertion and assembly operation.

More precisely, said inclined surfaces 60 deform when the cited cam element 25 is inserted which in general has a larger dimension than the opening 18 of the hollow body 16 of the casing.

This means that the pin 11 and the cam element 25 can be inserted inside the hollow body 16 of the casing and are pushed forward until the shaft 41 is inserted in the hole 40 obtained in the flat surface 39 of the bottom of the body 16 of the casing. Likewise in an annular lowered section 55, also the head 42 of the cam element 25 is arranged in the hole 44 in the body 16 of the casing, on the opposite side to the hole 40.

In this way the cam element 25 is stably positioned inside the hollow body 16 of the casing.

In fact, the inclined surfaces 60, in the form of flexible elements, as mentioned, temporarily deform during insertion of the components in the hollow body 16 of the casing and return to position after said insertion and assembly operation, locking them stably in the body 16 of the device.

In short, these inclined surfaces 60 provide means or elements, which in this example are flexible or elastic, for retaining the cam element 25 inside the hollow body 16 of the casing in an operating position, once inserted.

Nevertheless, said retaining means of the cam element 25 inside the body 16 of the casing can also be produced differently, as will be seen below.

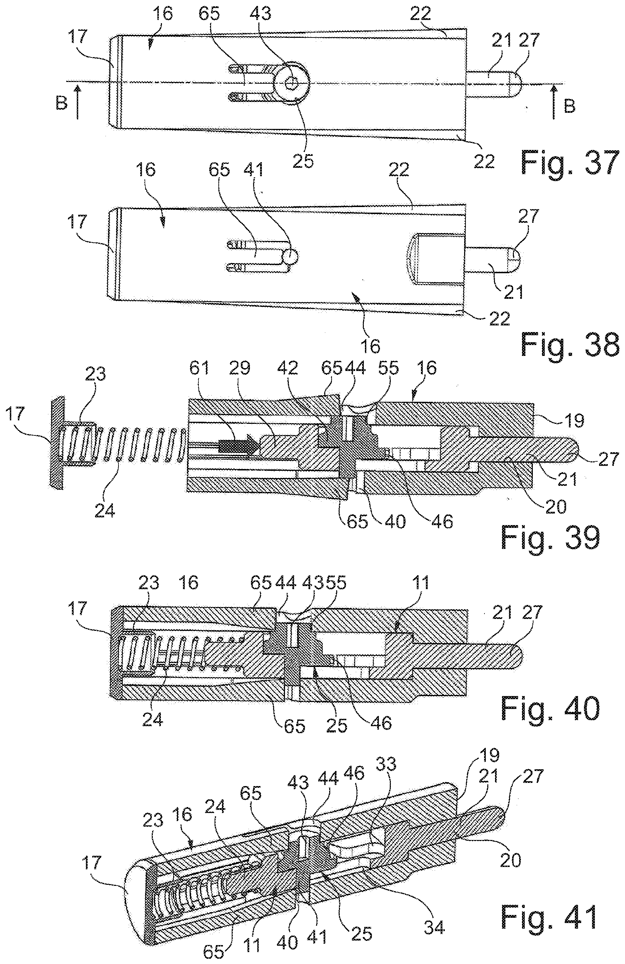

In fact, figures 37 to 41 show in various views a further variation of the body of the casing which allows insertion of the parts inside it by in-line assembly which entails a different embodiment of the retaining means of the cam element 25 within the body 16 of the casing, once said cam element 25 has been inserted.

Figures 37 and 38 show the closed body 16 by means of external plan views 180° from each other.

In this further different embodiment of the hollow body 16 of the device, flexible or elastic tabs 65 are provided in inner walls of the hollow body 16 in the vicinity of a central part near to the cited holes 40 and 44 used for stable positioning of the cam element 25.

More precisely, the opening 18 of the hollow body 16 has a dimension almost identical to the maximum axial extension of the cam element 25, allowing easy insertion therein.

As mentioned, the inner dimension of the hollow body 16 narrows in a central part preceding the cited holes 40 and 44 due to the provision of the flexible tabs 65 in inner walls of the hollow body 16, which limit the dimension of the hollow body 16.

Figures 39, 40 and 41 show insertion of the components of the hollow body 16 of the device.

Figure 39 shows a section along the line B-B of figure 37 in which the pin 11 has been automatically inserted in-line according to the arrow 61; the cam element 25 has been previously associated with and positioned in the pin 11.

In this insertion phase, not yet completed, the cam element 25 associated with the pin 11 wedges below and raises the flexible tabs 65 provided in the inner walls of the hollow body 16. Said raising, thanks to the flexibility of the tabs 65, allows the pin 11 with relative cam element 25 to position centrally in the hollow body 16 in the holes 40 and 44. In fact, the following figure 40 shows how on one side the annular lowered section 55 of the head 42 of the cam element 25 is arranged in the hole 44. On the other side, it shows how the shaft 41 of the cam element 25 is inserted in the hole 40 obtained in the flat surface 39 of the bottom of the body 16 of the casing. This ensures stable positioning of the cam element 25 since the flexible tabs 65 provided in the inner walls of the hollow body 16 return to the rest position, locking the cam element 25 in the work position.

In addition to these retaining means of the cam element 25 of flexible type shown previously, said retaining means can also be non-flexible or elastic and the hollow body 16 of the casing does not necessarily have to be cylindrical or similar.

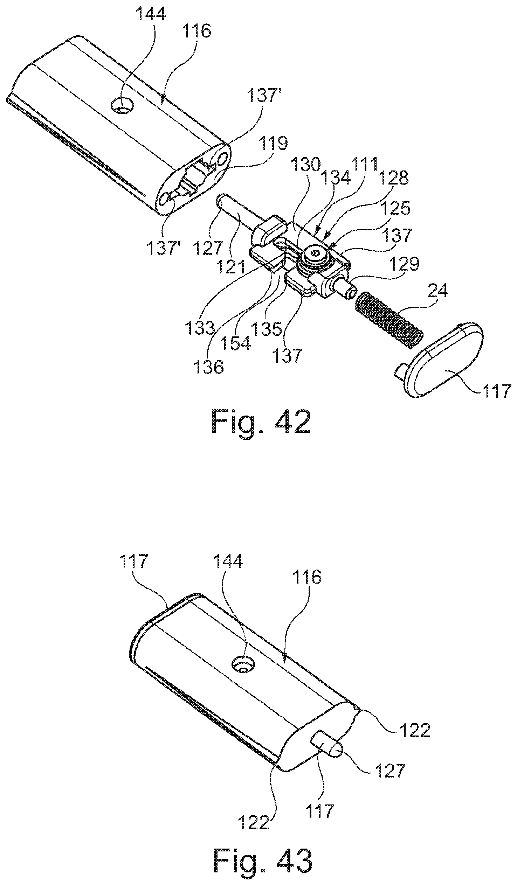

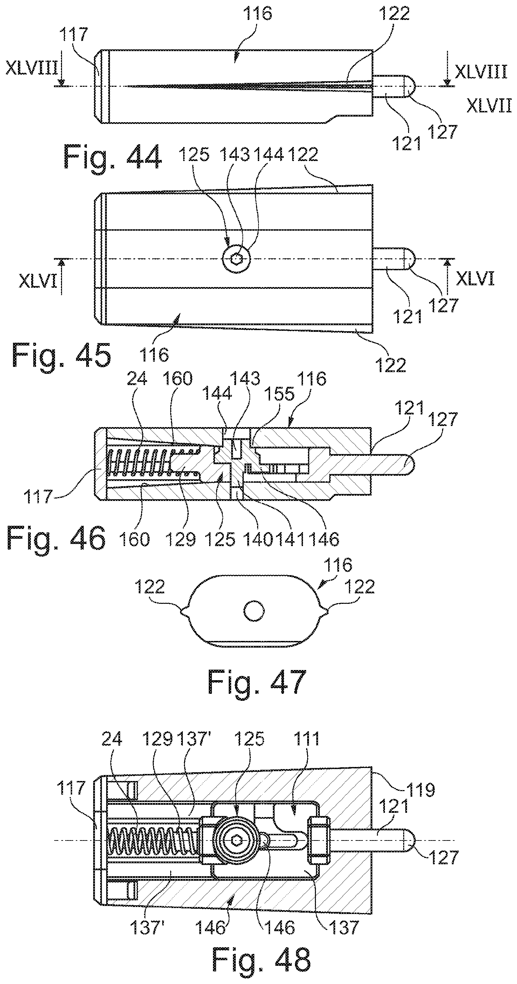

In said regard, figures 42 to 48 show a further embodiment of the rigid support and fixing device for furniture shelves according to the invention in which the body of the casing has a shape similar in section to an oval or similar. In this example, for identical elements the same reference numbers will be used preceded if necessary by a "1".

Said further example has a body 116 in section in oval shape or similar while the pin 111 has an intermediate section 128 wider than the front and rear parts which have on one side the free terminal end 121 of the pin 111 and on the other side the axial extension 129 which acts as a centring and abutment for the spring 24.

The central section 128 of the pin 111 runs laterally with its lateral appendages 137 in grooves 137' obtained in the hollow body 116 of the casing.

Said intermediate section 128 of the pin 111 also has a flat surface 130 in which a longitudinal slot-shaped recess 133 is obtained aligned with a slot 134. Also here, on one side of the slot-shaped recess 133, a through opening 154 is provided which opens onto the lateral surface of the intermediate section 128 of the pin 111. Also here, opposite ends of this through opening 154 identify engagement surfaces 135 and 136 for part of the cam element 125, namely for the eccentric lobed element 146.

The inside of the hollow body 116 is provided, as previously described, with inclined surfaces 160 that temporarily deform during insertion of the components in the hollow body 116 of the casing and return to position after said insertion and assembly operation.

In this way it is possible for the pin 111 and the cam element 125 to be inserted inside the hollow body 116 of the casing and pushed forward until the shaft 141 is inserted in the hole 140 obtained in the flat surface 139 of the bottom of the body 116 of the casing. Similarly an annular lowered section 155 of the head 142 of the cam element 125 is arranged in the hole 144 present in the body 116 of the casing, on the opposite side to the hole 140.

In this way the cam element 125 is stably positioned within the hollow body 116 of the casing.

Also this further example, therefore, features the body 116 of the casing in a single piece, except for the plug 117, with components inserted at one end of the body, cam element 125 for removal of the shelf provided with the device of the invention, and retaining means for retaining in situ the cam element in the hollow body once inserted, in this case of the elastic or flexible type.

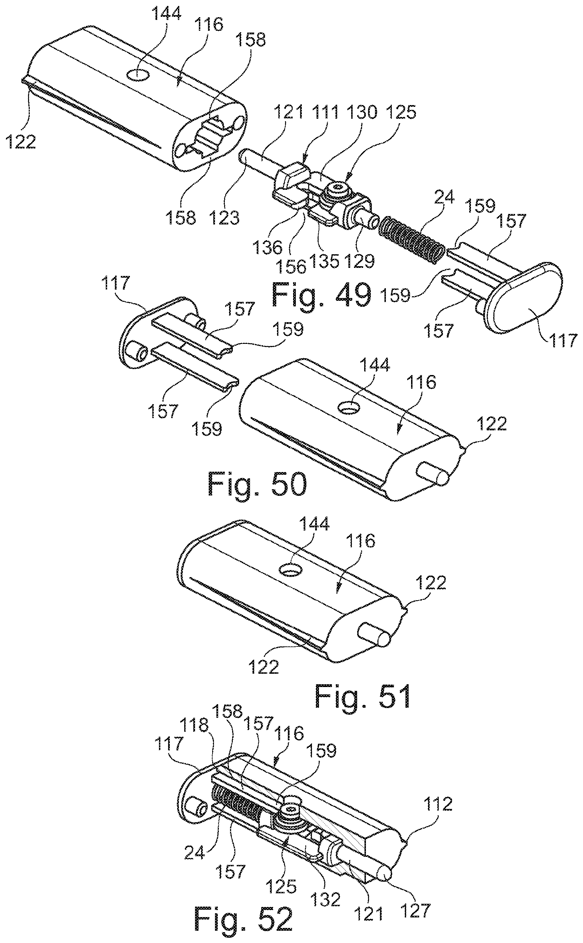

Figures 49 to 59 show a further embodiment of the device of the invention with closed body and, as will be seen, with retaining means of essentially rigid type. Also in this example, where possible, the same reference numbers will be used for identical elements.

As anticipated, an interesting variation in this example consists in the fact that the means for retaining in situ the cam element in the hollow body once inserted can be of essentially rigid type.

In this way it can be seen that a plug 117 can be arranged to close an opening 118 of the body 116 of the casing; said plug is provided with rigid tongues 157 which are inserted in longitudinal grooves 158 obtained axially inside the hollow body 116.

In this case, once the pin 111 and the cam element 125 have been inserted in the hollow body 116 of the casing, the plug 117 with its rigid tongues 157 is inserted in the body 116 of the casing.

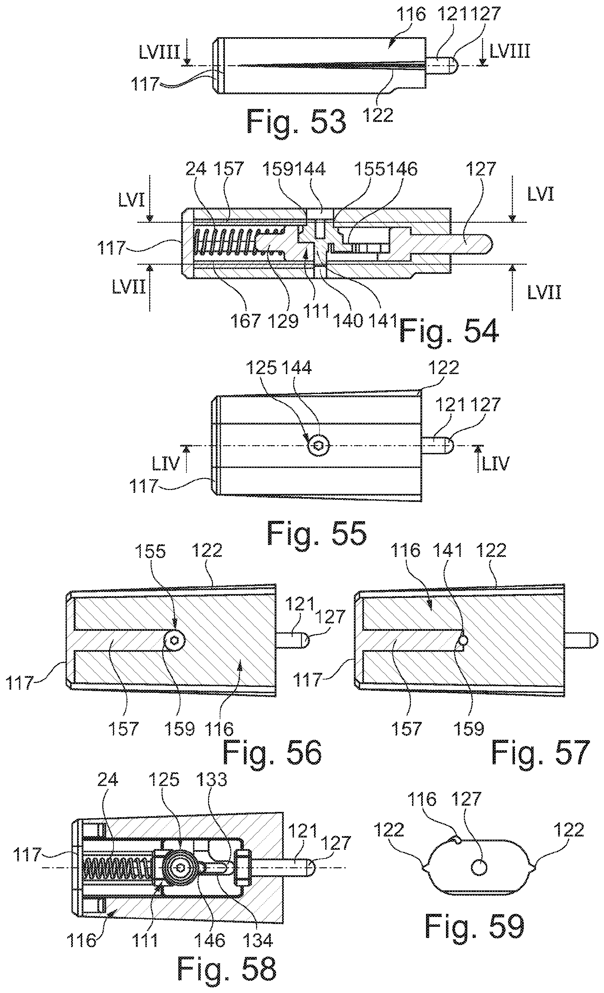

In this way rounded ends 159 of the rigid tongues 157 lock the cam element 125 in position. This occurs because on one side they lock the shaft 141, aligned with the hole 140 obtained in the flat surface 139 of the bottom of the body 116 of the casing. On the other side, said rounded ends 159 of the rigid tongues 157 engage and lock the annular lowered section 155 of the head 142 of the cam element 125 which has aligned with the hole 144 present in the body 116 of the casing (figure 54).

Said arrangement of essentially rigid retaining means can also be used in a device such as the one of the first embodiment previously illustrated in figures 1 and 2 using a plug such as the one just described and illustrated.

In this way, the cam element 125 is stably positioned inside the hollow body 116 of the casing.

Also in this further example, advantageously the elements or components shown in the figures and briefly described can be easily inserted in the body of the casing by means of automatic in-line assembly.

No further elements are required other than those seen in the preceding descriptions and in the figures.

While being compact, the device according to the present invention is extremely robust and simple and easy to assemble and operate.

The completely closed casing prevents any type of infiltration into the device of foreign materials that could, for example, be found in the hole of the shelf, such as drilling residues and the like.

This guarantees correct operation of the device. The complete closure of the body of the casing prevents any type of contact, also accidental, with the inner parts of the device.

The presence of ribs or fins 22, arranged on opposite sides of the outer surface of the body 16, 116 of the casing, which taper towards the other end, allow stable safe positioning of the device.

Said ribs and fins 22 interact with the inner wall of the hole made in the shelf, increasing the stability and distributing the stress due to the loads borne by the shelf.

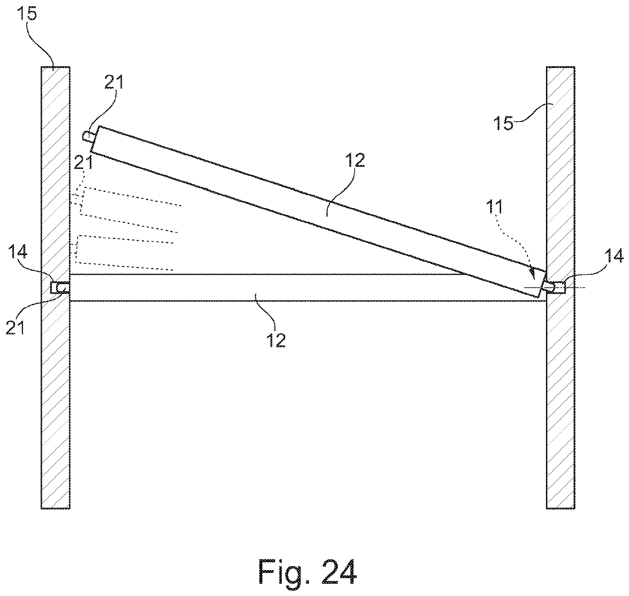

Figures 24 to 26 show how the device of the present invention is positioned within the shelf 12 and how the shelf can be arranged in situ between the sides 15.

For aesthetic reasons, a hole 52 in the shelf 12 providing access to the device, namely to the shaped seat 43 of the cam element 25, 125 for the engagement of a wrench 53, such as an Allen key, must obviously be as concealed from view as possible.

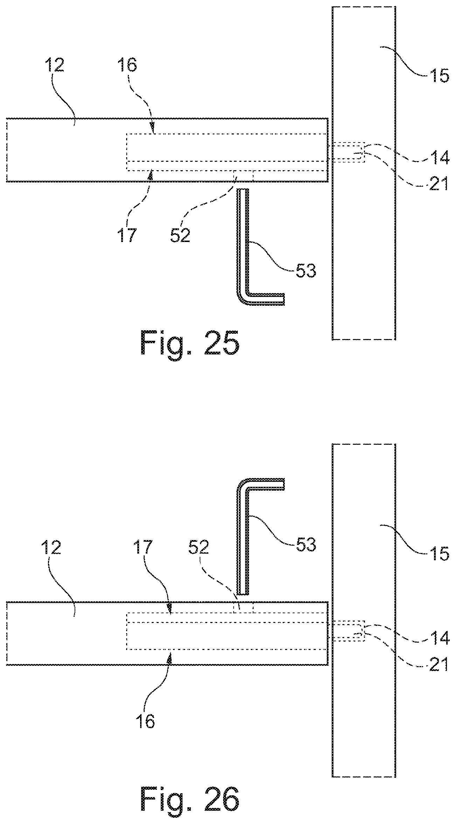

Figure 24 shows how the hole 52 is arranged below the shelf concealed from view in an intermediate or lower shelf 12 of a furniture unit. Figure 25 shows how the hole 52 is arranged above the shelf 12 concealed from view in an upper shelf 12 of the furniture unit.

Also in this case the drawbacks of the known art have been overcome and the device has been given a high degree of rigidity, ensuring safe positioning of the shelf.

Once again, it should be noted that a device of the present invention allows simple rapid in-line assembly, avoiding additional operating costs and times.

The object specified in the preamble to the description is therefore achieved.

The protective scope of the present invention is defined by the attached claims.

## Claims

1. A rigid support and fixing device for furniture shelves arranged between opposite sides comprising:
a casing (16, 116) which contains a pin (11, 111) pushed at one end by a spring (24) and movable within it either freely or in an externally controlled manner to compress the cited spring (24), said pin (11, 111) being movable between a position of maximum extraction and a position of maximum retraction inside the casing;
a cam element (25, 125) for controlling the movement of said pin from said position of maximum extraction to said position of maximum retraction inside the casing, wherein said pin (11, 111) is free to move under the action of the spring between said position of maximum extraction and said position of maximum retraction inside the casing when said cam element (25, 125) is arranged in a rest position; wherein
said casing comprises a hollow body (16, 116), an end wall (19, 119) of which is provided with a through hole (20, 120) for the passage of a free terminal end (21, 121) of the pin (11, 111) that slides internally in an axial direction, and the other end has an opening (18, 118) that receives the closing plug (17, 117) of the opening (18, 118);
said pin (11) comprises a cylindrical end portion (21, 121) with smaller diameter and an intermediate section (28, 128), in which said cam element (25, 125) is arranged;
said intermediate section (28, 128) of said pin (11, 111) has a flat surface (30, 130), which is provided with a longitudinal slot-shaped recess (33, 133) in which an eccentric lobed element (46, 146) of said cam element (25, 125) is arranged, acting on an engagement surface (35, 35', 135) of a through opening (54, 154) of said slot-shaped recess (33, 133) and thus determining the movement of said pin (11, 111) between said position of maximum extraction and said position of maximum retraction inside the casing by rotation of the cam element (25, 125);
retaining means or elements (40, 44; 60; 65; 157) being also provided for retaining the cam element (25, 125) inside the hollow body (16, 116) of the casing in an operating position once inserted.

2. The device according to claim 1, **characterized in that** said retaining means or elements (40, 44; 60; 65; 157) for retaining the cam element (25, 125) inside the hollow body (16, 116) of the casing in an operating position once inserted are rigid (40, 44, 157) or flexible (60, 65).

3. The device according to claim 2, **characterized in that** said retaining means or elements for retaining the cam element (25, 125) inside the hollow body (16, 116) of the casing in an operating position once inserted are rigid tongues (157) which extend from said plug (17, 117) that closes the opening (18, 118), where said rigid tongues (157) are inserted in longitudinal grooves (158) obtained axially inside the hollow body (16, 116).

4. The device according to claim 3, **characterized in that** said rigid tongues (157) have rounded ends (159) which are positioned to lock said cam element (25, 125).

5. The device according to claim 2, **characterized in that** said retaining means or elements for retaining the cam element (25, 125) inside the hollow body (16, 116) of the casing in an operating position, once inserted, are inclined surfaces (60, 160) obtained inside the hollow body (16, 116) which temporarily deform during the insertion of components of the device in the hollow body (16, 116) of the casing and return to position after said insertion and assembly operation.

6. The device according to claim 5, **characterized in that** an annular lowered section (55, 155) of a head (42, 142) of the cam element (25, 125) is arranged in a hole (44, 144) provided in the hollow body (16, 116) of the casing.

7. The device according to claim 2, **characterized in that** said retaining means or elements for retaining the cam element (25, 125) inside the hollow body (16, 116) of the casing in an operating position, once inserted, are flexible or elastic tabs (65) provided in inner walls of the hollow body (16, 116) in the vicinity of a central part near the holes (40, 44, 140, 144) used for stable positioning of the cam element (25, 125).

8. The device according to one or more of the preceding claims 1-7, **characterised in that** said pin (11, 111) in said intermediate section (28, 128) is provided with a true slot (34, 134), which is arranged in an axial direction to the pin (11, 111) and is aligned with said longitudinal slot-shaped recess (33, 133).

9. The device according to claim 8, **characterized in that** said eccentric lobed element (46, 146) of the cam element (25, 125) slides in a recess (47, 147) provided inside the lateral wall of the hollow body (16, 116).

10. The device according to one or more of the preceding claims, **characterized in that** said cam element (25, 125) comprises at the bottom a pin-like or shaft-like first end (41, 141), with smaller diameter, that acts as a rotation axis for the cam element (25, 125) and at the other end a cylindrical head (42, 142), having larger diameter than the shaft (41, 141), coaxial with it, and provided with a shaped seat (43, 143) having polygonal or otherwise shaped section for the engagement of a wrench.

11. The device according to claim 10, **characterized in that** a disc portion (45, 145) which rests on said flat surface (30, 130) of the intermediate section (28, 128) of the pin (11, 111) and, below the disc portion (45, 145), said eccentric lobed element (46, 146) which protrudes beyond the maximum diameter of the disc portion (45, 145) are also provided in an intermediate portion of the cam element (25, 125), immediately below the head (42, 142).

12. The device according to claim 10, **characterized in that** said shaft (41, 141) is arranged in a hole (40, 140) provided on a flat surface (39, 139) obtained on the bottom of the box-shaped containment recess (23, 123) of the hollow body (16, 116) of the casing.

13. The device according to claim 10, **characterized in that** said cylindrical head (42, 142) of said cam element (25, 125) is aligned with a hole (44, 144) obtained in the hollow body (16, 116) of said casing.

14. The device according to one or more of the preceding claims, **characterized in that** said hollow body (16, 116) of said casing has externally, on a lateral portion of the end provided with a hole (20, 120), a pair of ribs or fins (22, 122) arranged on opposite sides of its outer surface.

15. The device according to claim 10, **characterized in that** said pair of ribs or fins (22, 122) taper towards the other end of the hollow body (16, 116).

16. The device according to one or more of the preceding claims, **characterized in that** said hollow body (16, 116) of said casing has an essentially cylindrical general shape.

17. The device according to one or more of the preceding claims 1-15, **characterized in that** said hollow body (16, 116) of said casing has an essentially oval or similar general shape in section.

18. The device according to claim 1, **characterized in that** said cam element (25, 125) has a pair of through openings (54, 154) on opposite sides of said slot-shaped recess (33, 133) which have engagement surfaces (35, 35'; 135) for an eccentric lobed element (46, 146) of said cam element (25, 125).

19. The device according to one or more of the preceding claims 1-18, **characterized in that** said intermediate section (28, 128) is followed by an axial extension (29, 129) which extends from the pin (11, 111) and acts as a centring and abutment for the spring (24).

## Patentansprüche

1. Starre Stütze und Befestigungsvorrichtung für Möbelregale, die zwischen gegenüberliegenden Seiten angeordnet sind, umfassend:
ein Gehäuse (16, 116), das einen Stift (11, 111) enthält, der an einem Ende von einer Feder (24) gedrückt wird und darin entweder frei oder in einer von außen gesteuerten Weise beweglich ist, um die erwähnte Feder (24) zusammenzudrücken, wobei der Stift (11, 111) zwischen einer Position des maximalen Herausziehens und einer Position des maximalen Einziehens innerhalb des Gehäuses beweglich ist;
ein Nockenelement (25, 125) zum Steuern der Bewegung des Stifts von der Position des maximalen Herausziehens zu der Position des maximalen Einziehens in das Gehäuse, wobei der Stift (11, 111) sich unter der Wirkung der Feder frei zwischen der Position des maximalen Herausziehens und der Position des maximalen Einziehens in das Gehäuse bewegen kann, wenn das Nockenelement (25, 125) in einer Ruheposition angeordnet ist; wobei
das Gehäuse einen hohlen Körper (16, 116) umfasst, von dem eine Endwand (19, 119) ein Durchgangsloch (20, 120) für den Durchgang eines freien Endes (21, 121) des Stifts (11, 111) aufweist, das innen in einer axialen Richtung gleitet, und das andere Ende eine Öffnung (18, 118) aufweist, die den Verschlussstopfen (17, 117) der Öffnung (18, 118) empfängt;
der Stift (11) einen zylindrischen Endabschnitt (21, 121) mit kleinerem Durchmesser und einen Zwischenabschnitt (28, 128) umfasst, in dem das Nockenelement (25, 125) angeordnet ist;
der Zwischenabschnitt (28, 128) des Stifts (11, 111) eine ebene Oberfläche (30, 130) aufweist, die eine längliche, schlitzförmige Vertiefung (33, 133) aufweist, in der ein exzentrisches, gelapptes Element (46, 146) des Nockenelements (25, 125) angeordnet ist, das auf eine Eingriffsoberfläche (35, 35', 135) einer Durchgangsöffnung (54, 154) der schlitzförmigen Vertiefung (33, 133) einwirkt und so die Bewegung des Stifts (11, 111) zwischen der Position des maximalen Herausziehens und der Position des maximalen Einziehens im Inneren des Gehäuses durch Drehung des Nockenelements (25, 125) bestimmt;
Haltemittel oder -elemente (40, 44; 60; 65; 157), die ebenfalls bereitgestellt werden, um das Nockenelement (25, 125) innerhalb des hohlen Körpers (16, 116) des Gehäuses in einer Betriebsposition zu halten, sobald es eingesetzt ist.

2. Vorrichtung nach Anspruch 1, **dadurch gekennzeichnet, dass** die Haltemittel oder -elemente (40, 44; 60; 65; 157) zum Halten des Nockenelements (25, 125) im Inneren des hohlen Körpers (16, 116) des Gehäuses in einer Betriebsposition nach dem Einsetzen starr (40, 44, 157) oder flexibel (60, 65) sind.

3. Vorrichtung nach Anspruch 2, **dadurch gekennzeichnet, dass** die Haltemittel oder -elemente zum Halten des Nockenelements (25, 125) im Inneren des hohlen Körpers (16, 116) des Gehäuses in einer einmal eingeführten Betriebsposition starre Zungen (157) sind, die sich von dem die Öffnung (18, 118) verschließenden Stopfen (17, 117) aus erstrecken, wobei die starren Zungen (157) in Längsnuten (158) eingesetzt sind, die axial im Inneren des hohlen Körpers (16, 116) erhalten werden.

4. Vorrichtung nach Anspruch 3, **dadurch gekennzeichnet, dass** die starren Zungen (157) abgerundete Enden (159) aufweisen, die so positioniert sind, dass sie das Nockenelement (25, 125) verriegeln.

5. Vorrichtung nach Anspruch 2, **dadurch gekennzeichnet, dass** die Haltemittel oder -elemente zum Halten des Nockenelements (25, 125) im Inneren des hohlen Körpers (16, 116) des Gehäuses in einer Betriebsposition nach dem Einsetzen geneigte Oberflächen (60, 160) sind, die im Inneren des hohlen Körpers (16, 116) erhalten werden, die sich während des Einsetzens von Komponenten der Vorrichtung in den hohlen Körper (16, 116) des Gehäuses vorübergehend verformen und nach dem Einsetz- und Montagevorgang in die Position zurückkehren.

6. Vorrichtung nach Anspruch 5, **dadurch gekennzeichnet, dass** ein ringförmig abgesenkter Abschnitt (55, 155) eines Kopfes (42, 142) des Nockenelements (25, 125) in einem Loch (44, 144) angeordnet ist, das im hohlen Körper (16, 116) des Gehäuses bereitgestellt ist.

7. Vorrichtung nach Anspruch 2, **dadurch gekennzeichnet, dass** die Haltemittel oder -elemente zum Halten des Nockenelements (25, 125) im Inneren des hohlen Körpers (16, 116) des Gehäuses in einer Betriebsposition, sobald sie eingesetzt sind, flexible oder elastische Laschen (65) sind, die in den Innenwänden des hohlen Körpers (16, 116) in der Nähe eines zentralen Teils in der Nähe der Löcher (40, 44, 140, 144) bereitgestellt werden, die zur stabilen Positionierung des Nockenelements (25, 125) dienen.

8. Vorrichtung nach einem oder mehreren der vorstehenden Ansprüche 1 bis 7, **dadurch gekennzeichnet, dass** der Stift (11, 111) in dem Zwischenabschnitt (28, 128) mit einem echten Schlitz (34, 134) versehen ist, der in axialer Richtung zum Stift (11, 111) angeordnet und mit der länglichen schlitzförmigen Vertiefung (33, 133) ausgerichtet ist.

9. Vorrichtung nach Anspruch 8, **dadurch gekennzeichnet, dass** das exzentrisch gelappte Element (46, 146) des Nockenelements (25, 125) in einer Vertiefung (47, 147) gleitet, die innerhalb der Seitenwand des hohlen Körpers (16, 116) bereitgestellt ist.

10. Vorrichtung nach einem oder mehreren der vorstehenden Ansprüche, **dadurch gekennzeichnet, dass** das Nockenelement (25, 125) an der Unterseite ein stift- oder wellenförmiges erstes Ende (41, 141) mit kleinerem Durchmesser aufweist, das als Drehachse für das Nockenelement (25, 125) dient, und am anderen Ende einen zylindrischen Kopf (42, 142), der einen größeren Durchmesser als die Welle (41, 141) aufweist, koaxial zu dieser ist und mit einem geformten Sitz (43, 143) bereitgestellt wird, der einen polygonalen oder anders geformten Abschnitt für den Eingriff eines Schraubenschlüssels aufweist.

11. Vorrichtung nach Anspruch 10, **dadurch gekennzeichnet, dass** ein Scheibenabschnitt (45, 145), der auf der ebenen Oberfläche (30, 130) des Zwischenabschnitts (28, 128) des Stifts (11, 111) aufliegt, und, unterhalb des Scheibenabschnitts (45, 145), das exzentrische, gelappte Element (46, 146), das über den maximalen Durchmesser des Scheibenabschnitts (45, 145) hinausragt, ebenfalls in einem Zwischenabschnitt des Nockenelements (25, 125), unmittelbar unterhalb des Kopfes (42, 142), bereitgestellt werden.

12. Vorrichtung nach Anspruch 10, **dadurch gekennzeichnet, dass** die Welle (41, 141) in einem Loch (40, 140) angeordnet ist, das auf einer ebenen Oberfläche (39, 139) bereitgestellt wird, die auf dem Boden der kastenförmigen Aufnahmeaussparung (23, 123) des hohlen Körpers (16, 116) des Gehäuses erhalten wird.

13. Vorrichtung nach Anspruch 10, **dadurch gekennzeichnet, dass** der zylindrische Kopf (42, 142) des Nockenelements (25, 125) auf ein Loch (44, 144) ausgerichtet ist, das im hohlen Körper (16, 116) des Gehäuses erhalten wird.

14. Vorrichtung nach einem oder mehreren der vorstehenden Ansprüche, **dadurch gekennzeichnet, dass** der hohle Körper (16, 116) des Gehäuses außen, an einem seitlichen Abschnitt des mit einem Loch (20, 120) bereitgestellten Endes, ein Paar von Rippen oder Flossen (22, 122) aufweist, die auf gegenüberliegenden Seiten seiner äußeren Oberfläche angeordnet sind.

15. Vorrichtung nach Anspruch 10, **dadurch gekennzeichnet, dass** sich das Paar Rippen oder Flossen (22, 122) zum anderen Ende des hohlen Körpers (16, 116) hin verjüngt.

16. Vorrichtung nach einem oder mehreren der vorstehenden Ansprüche, **dadurch gekennzeichnet, dass** der hohle Körper (16, 116) des Gehäuses eine im Wesentlichen zylindrische allgemeine Form aufweist.

17. Vorrichtung nach einem oder mehreren der vorstehenden Ansprüche 1 bis 15, **dadurch gekennzeichnet, dass** der hohle Körper (16, 116) des Gehäuses eine im Wesentlichen ovale oder im Allgemeinen ähnliche Form im Abschnitt aufweist.

18. Vorrichtung nach Anspruch 1, **dadurch gekennzeichnet, dass** das Nockenelement (25, 125) auf gegenüberliegenden Seiten der schlitzförmigen Vertiefung (33, 133) ein Paar von Durchgangsöffnungen (54, 154) aufweist, die Eingriffsoberflächen (35, 35'; 135) für ein exzentrisch gelapptes Element (46, 146) des Nockenelements (25, 125) aufweisen.

19. Vorrichtung nach einem oder mehreren der vorstehenden Ansprüche 1 bis 18, **dadurch gekennzeichnet, dass** sich an den Zwischenabschnitt (28, 128) eine axiale Verlängerung (29, 129) anschließt, die sich von dem Stift (11, 111) aus erstreckt und als Zentrierung und Widerlager für die Feder (24) dient.

## Revendications

1. Dispositif de support et de fixation rigide pour étagères de meubles agencées entre des côtés opposés, comprenant :
un boîtier (16, 116) qui contient une goupille (11, 111) poussée à une extrémité par un ressort (24) et mobile à l'intérieur de celui-ci soit librement, soit de manière commandée de l'extérieur pour comprimer le ressort susmentionné (24), ladite goupille (11, 111) étant mobile entre une position d'extraction maximale et une position de rétraction maximale à l'intérieur du boîtier ;
un élément de came (25, 125) pour commander le mouvement de ladite goupille depuis ladite position d'extraction maximale jusqu'à ladite position de rétraction maximale à l'intérieur du boîtier, dans lequel ladite goupille (11, 111) est libre de se déplacer sous l'action du ressort entre ladite position d'extraction maximale et ladite position de rétraction maximale à l'intérieur du boîtier lorsque ledit élément de came (25, 125) est en position de repos ; dans lequel
ledit boîtier comprend un corps creux (16, 116), dont une paroi d'extrémité (19, 119) est munie d'un trou traversant (20, 120) pour le passage d'une extrémité terminale libre (21, 121) de la goupille (11, 111) qui coulisse à l'intérieur dans une direction axiale, et l'autre extrémité comporte une ouverture (18, 118) qui reçoit le bouchon de fermeture (17, 117) de l'ouverture (18, 118) ;
ladite goupille (11) comprend une partie d'extrémité cylindrique (21, 121) de diamètre plus petit et une section intermédiaire (28, 128), dans lequel ledit élément de came (25, 125) est agencé ;
ladite section intermédiaire (28, 128) de ladite goupille (11, 111) présente une surface plane (30, 130), qui est munie d'un évidement longitudinal en forme de fente (33, 133) dans lequel est agencé un élément lobé excentré (46, 146) dudit élément de came (25, 125), agissant sur une surface en prise (35, 35', 135) d'une ouverture traversante (54, 154) dudit évidement en forme de fente (33, 133) et déterminant ainsi le mouvement de ladite goupille (11, 111) entre ladite position d'extraction maximale et ladite position de rétraction maximale à l'intérieur du boîtier par rotation de l'élément de came (25, 125) ;
des moyens ou éléments de retenue (40, 44 ; 60 ; 65 ; 157) étant également prévu pour retenir l'élément de came (25, 125) à l'intérieur du corps creux (16, 116) du boîtier dans une position de fonctionnement une fois inséré.

2. Dispositif selon la revendication 1, **caractérisé en ce que** lesdits moyens ou éléments de retenue (40, 44 ; 60 ; 65 ; 157) pour retenir l'élément de came (25, 125) à l'intérieur du corps creux (16, 116) du boîtier dans une position de fonctionnement une fois insérés sont rigides (40, 44, 157) ou flexibles (60, 65).

3. Dispositif selon la revendication 2, **caractérisé en ce que** lesdits moyens ou éléments de retenue pour retenir l'élément de came (25, 125) à l'intérieur du corps creux (16, 116) du boîtier en position de fonctionnement une fois inséré sont des languettes rigides (157) qui se prolongent à partir dudit bouchon (17, 117) qui ferme l'ouverture (18, 118), où lesdites languettes rigides (157) sont insérées dans des rainures longitudinales (158) obtenues axialement à l'intérieur du corps creux (16, 116).

4. Dispositif selon la revendication 3, **caractérisé en ce que** lesdites languettes rigides (157) ont des extrémités arrondies (159) qui sont positionnées pour verrouiller ledit élément de came (25, 125).

5. Dispositif selon la revendication 2, **caractérisé en ce que** lesdits moyens ou éléments de retenue pour retenir l'élément de came (25, 125) à l'intérieur du corps creux (16, 116) du boîtier en position de fonctionnement, une fois insérés, sont des surfaces inclinées (60, 160) obtenues à l'intérieur du corps creux (16, 116) qui se déforment temporairement lors de l'insertion des composants du dispositif dans le corps creux (16, 116) du boîtier et reviennent à leur position après ladite insertion et opération d'assemblage.

6. Dispositif selon la revendication 5, **caractérisé en ce qu'**une section annulaire abaissée (55, 155) d'une tête (42, 142) de l'élément de came (25, 125) est agencée dans un trou (44, 144) prévu dans le corps creux (16, 116) du boîtier.

7. Dispositif selon la revendication 2, **caractérisé en ce que** lesdits moyens ou éléments de retenue pour retenir l'élément de came (25, 125) à l'intérieur du corps creux (16, 116) du boîtier en position de fonctionnement, une fois insérés, sont des languettes flexibles ou élastiques (65) prévues dans les parois intérieures du corps creux (16, 116) à proximité d'une partie centrale près des trous (40, 44, 140, 144) utilisés pour le positionnement stable de l'élément de came (25, 125).

8. Dispositif selon l'une ou plusieurs des revendications précédentes 1 à 7, **caractérisé en ce que** ladite goupille (11, 111) dans ladite section intermédiaire (28, 128) est munie d'une véritable fente (34, 134), qui est agencée dans une direction axiale par rapport à la goupille (11, 111) et est alignée avec ledit évidement longitudinal en forme de fente (33, 133).

9. Dispositif selon la revendication 8, **caractérisé en ce que** ledit élément lobé excentrique (46, 146) de l'élément de came (25, 125) glisse dans un évidement (47, 147) prévu à l'intérieur de la paroi latérale du corps creux (16, 116).

10. Dispositif selon l'une ou plusieurs des revendications précédentes, **caractérisé en ce que** ledit élément de came (25, 125) comprend à sa base une première extrémité (41, 141) en forme de goupille ou d'arbre, de diamètre inférieur, qui sert d'axe de rotation pour l'élément de came (25, 125), et à l'autre extrémité une tête cylindrique (42, 142), de diamètre supérieur à celui de l'arbre (41, 141), coaxiale à celui-ci, et munie d'un siège profilé (43, 143) ayant une section polygonale ou autrement profilée pour la prise d'une clé.

11. Dispositif selon la revendication 10, **caractérisé en ce qu'**une partie de disque (45, 145) qui repose sur ladite surface plane (30, 130) de la section intermédiaire (28, 128) de la goupille (11, 111) et, sous la partie de disque (45, 145), ledit élément lobé excentré (46, 146) qui fait saillie au-delà du diamètre maximal de la partie de disque (45, 145) sont également prévus dans une partie intermédiaire de l'élément de came (25, 125), immédiatement sous la tête (42, 142).

12. Dispositif selon la revendication 10, **caractérisé en ce que** ledit arbre (41, 141) est agencé dans un trou (40, 140) prévu sur une surface plane (39, 139) obtenue sur le fond de l'évidement de confinement en forme de boîte (23, 123) du corps creux (16, 116) du boîtier.

13. Dispositif selon la revendication 10, **caractérisé en ce que** ladite tête cylindrique (42, 142) dudit élément de came (25, 125) est alignée avec un trou (44, 144) obtenu dans le corps creux (16, 116) dudit boîtier.

14. Dispositif selon l'une ou plusieurs des revendications précédentes, **caractérisé en ce que** ledit corps creux (16, 116) dudit boîtier comporte extérieurement, sur une partie latérale de l'extrémité munie d'un trou (20, 120), une paire de nervures ou ailettes (22, 122) agencées de part et d'autre de sa surface extérieure.

15. Dispositif selon la revendication 10, **caractérisé en ce que** ladite paire de nervures ou ailettes (22, 122) s'effile vers l'autre extrémité du corps creux (16, 116).

16. Dispositif selon l'une ou plusieurs des revendications précédentes, **caractérisé en ce que** ledit corps creux (16, 116) dudit boîtier a une forme générale essentiellement cylindrique.

17. Dispositif selon l'une ou plusieurs des revendications précédentes 1 à 15, **caractérisé en ce que** ledit corps creux (16, 116) dudit boîtier a une forme générale essentiellement ovale ou similaire en section.

18. Dispositif selon la revendication 1, **caractérisé en ce que** ledit élément de came (25, 125) comporte une paire d'ouvertures traversantes (54, 154) sur les côtés opposés dudit évidement en forme de fente (33, 133) qui ont des surfaces de prise (35, 35' ; 135) pour un élément lobé excentrique (46, 146) dudit élément de came (25, 125).

19. Dispositif selon l'une ou plusieurs des revendications précédentes 1 à 18, **caractérisé en ce que** ladite section intermédiaire (28, 128) est suivie d'une extension axiale (29, 129) qui se prolonge à partir de la goupille (11, 111) et sert de centreur et de butée pour le ressort (24).
